# EUROPEAN PATENT SPECIFICATION

(11) **EP 0 772 096 B1**
(45) Date of publication and mention of the grant of the patent: **05.12.2001**
(21) Application number: 96306958.8
(22) Date of filing: 25.09.1996
(51) Int. Cl.: G03G 15/00, G03B 27/62

(54) **Counter-balance mechanism**
Gegengewichtsmechanismus
Mécanisme à contrepoids

(30) Priority: 31.10.1995 GB 9522257
(43) Date of publication of application: 07.05.1997
(73) Proprietor: XEROX CORPORATION, Rochester, New York 14644 (US)
(72) Inventor: Crawford, Jamie, Kirkella, Hull JU10 7QD (GB); Walker, John Michael, Lower Caldecote, Beds SG18 9ET (GB); Powell, Steven, Aberdare, Mid Glamorgan (GB)
(74) Representative: Grünecker, Kinkeldey, Stockmair & Schwanhäusser Anwaltssozietät

(56) References cited:
- EP-A- 0 573 022
- US-A- 4 520 977
- US-A- 4 853 750
- PATENT ABSTRACTS OF JAPAN vol. 006, no. 152 (P-134), 12 August 1982 & JP 57 070526 A (NHK SPRING CO LTD), 1 May 1982,

## Description

The present invention relates generally to a counter-balance mechanism and more particularly, but not exclusively, to a counter-balance mechanism for a recirculating document handler for delivering successive documents to an imaging station of a copier.

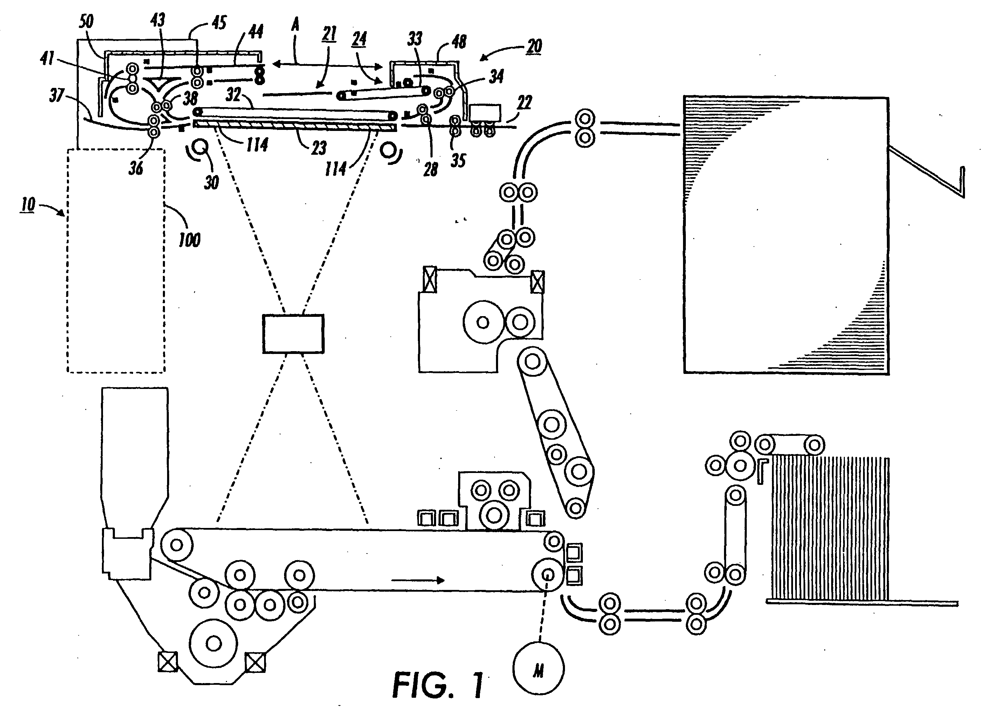

Fig. 1 shows an exemplary copier 10 with a document handling system 20 having a recirculatory input stacking tray 21. A recirculating document handler 24 (RDH) of the document handling system 20 provides for automatically transporting individual registered and spaced document sheets onto and over a conventional platen imaging station 23 of the copier 10, using a friction belt platen transport system 32 overlaying the platen 23. In this example, documents are fed one at a time from the bottom of a stack placed in the tray 21 by a driven belt 33 to a roller set 34 which direct documents to driven rollers 28 and then to the friction belt transport system 32 for imaging.

Documents input from a semi-automatic input are fed from a shelf 22 through rollers 35 to the platen 23.

Documents exiting the platen transport system 32 are then directed via a decision gate (not shown) to either the lower two rollers 36 or the rollers 38. Documents fed from the semi-automatic shelf 22 are directed to an output tray 37 via the decision gate and rollers 36.

Documents input from the tray 21 are directed by the gate to the rollers 38 from which they pass via a further decision gate 43 to either a pair of rollers 45 for feeding direct to the tray 21 or, if an inverting operation is required, to the lower pair of the three rollers 41. An inverted sheet can then be passed back to the tray 21 by the upper pair of the rollers 41. As apparent, the described arrangement of rollers provides for both simplex and duplex imaging of documents placed in the tray 21.

An optional moveable cover 44 may be provided to cover the tray 21 during a document handling operation, the cover being mounted in guide means and adapted to be driven automatically back and forth, as indicated by the arrow A, in a horizontal plane above the document loading area of the tray 21. The document handler has external covers 48, 50 to cover the moving parts, which covers 48,50 are substantially contiguous with the cover 44 when it is closed.

The exemplary copier 10 of Figure 1 is conventional, and need not be described in any great detail.

Conventionally, as disclosed above, the control of all document placement and feeding is by control unit 100, which is often a programmable microprocessor. A control unit of this type generally controls all functions of document handler system 20. The art readily teaches one to provide for a means and method to store and compare documents and copy counts to recognize jam signals, to implement time delays and the like through the control unit 100. Further, the control unit also controls all of the imaging and printing functions and steps of copier 10. A plurality of sensors are provided in the RDH to detect document jamming. A sensor is also provided to detect the presence of documents in the RDH and a sensor is provided to count the documents. The outputs from these sensors are coupled to the control unit 100.

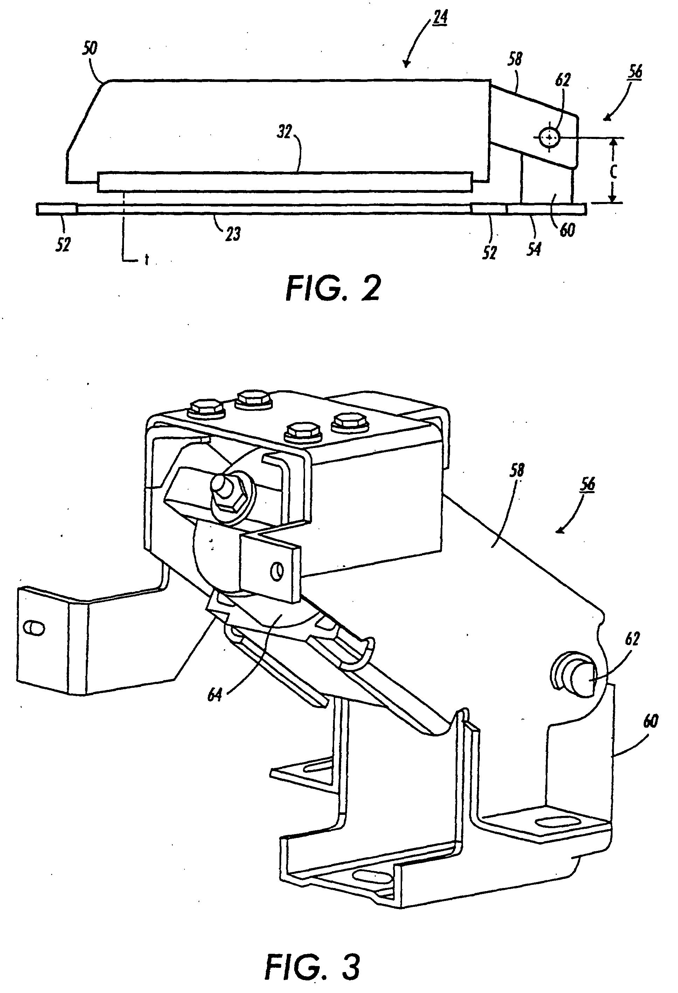

A section through a known document handler is shown in Figure 2. The section shown is a section taken through the handler 24 along a line into and orthogonal to the plane of Figure 1. For ease of illustration in Figure 2 none of the internal components of the document handler 24 are illustrated, the components of the document handler having already been shown and described in relation to Figure 1. The document handler in Figure 2 is illustrated in a horizontal position disposed over, and substantially parallel to, the platen glass 23. In practice the belts 32, which are spring biased downwardly, are essentially in contact with the platen glass 23 when there is no sheet disposed therebetween. In Figure 2, however, the belts 32 are shown at a small distance " t " above the platen glass 23, the distance "t" representing a predetermined, tolerance stack-up distance between the platen glass 23 and the belts 32 for when a sheet is present. In a photocopier, the variation in the tolerance stack-up distance "t" between the platen glass and the document handler can cause skewed or mis-registered position of the document, relative to the platen glass, which results in skewed or mis-registered copies. The tolerance stack-up distance is dependent on a number of parameters including, by way of example, the extent of wear on the belts 32 and the pressure with which the belts are biased downwardly on a document overlying the platen glass 23.

Referring in more detail to Figure 2, . the document handler 24 is shown pivotally supported on a top frame 54 of the copier by means of a counter -balance mechanism generally indicated by the numeral 56. The mechanism 56 consists of an upper member 58, one end of which is pivotally supported about a pivot point 62 to a lower member 60 vertically mounted on the frame 54. The other end of the upper member 58, remote from the pivot point 62, is attached to the main body of the document handler 24 thereby providing a device allowing the document handler to be pivoted towards and away from the platen 23.

The known counter-balance mechanism 56 is illustrated in more detail in Figure 3. The counter-balance mechanism 56 employs a captive spring 64 to bias the counterbalance to an "up" position when it is desired to place documents manually on the platen glass 23. When the document handler is pivoted downwardly about the pivot 62 towards the glass platen 23 a position is eventually reached when the document handler falls freely into its horizontal or "down" position. There is no provision for any adjustment should the tolerance stack-up distance "t" vary.

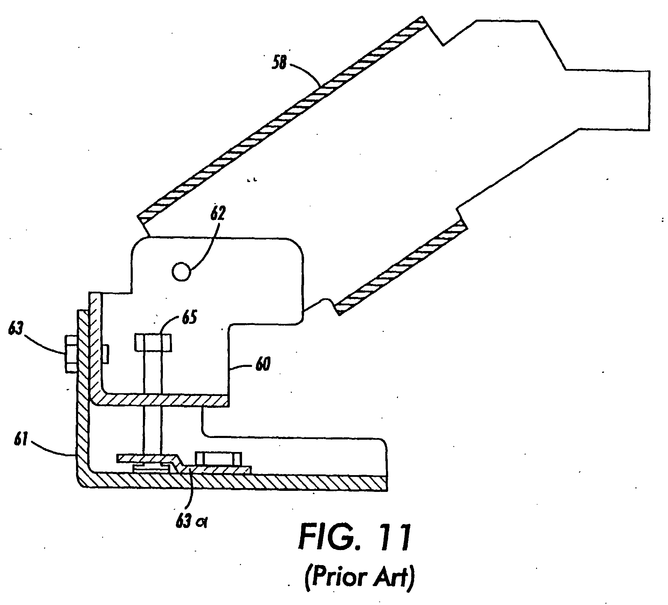

Another known form of counter-balance, shown in simplified cross-section in Figure 11, utilises an arrangement in which the lower member 60 of the counter-balance is held, and may be adjusted within, a third member 61. The adjustment in the height of the upper member 58 is achieved by loosening a locking screw 63 used for securing the lower member to the third member 61, and then turning a jack-screw 65 which passes through the base of the lower member 60. The lower end of the Jack-screw 65 is held in position by means of a bracket 63a bolted to the floor of the third member 61. The turning of the jack-screw 65 causes an adjustment in height between the lower member 60 and the third member 61. The lower member 60 is connected to the upper member 58 at the fixed pivot 62, there being no means of height adjustment between the upper and lower members 58,60, so that raising the lower member 60 causes the upper member 58 to raise by the same height. This known arrangement although providing a means of adjusting to compensate for the tolerance stack-up distance "t" is more complex than a counter-balance having just two main body members and, therefore, is more expensive to manufacture. In addition, to carry out the adjustments can be difficult to execute accurately, can be exceeding time consuming and there is no means provided for monitoring the exact amount of the adjustment that has actually been made. This latter disadvantage may be a major problem when two spaced counter-balances are used to support a document-handler. If the two counter-balances are not adjusted by exactly the same amount difficulties of varying degree may arise in the paper feeding process over the platen of the copier causing skewing of the paper during the feeding process. There is a need therefore to provide a far more accurate way of adjusting the height of the upper member of the counter-balance mechanism.

An object of the present invention is to provide a counter-balance for a document handler which is an improvement over known counter-balances used for that application. More particularly, the object is to provide a less expensive counter-balance which also provides a faster, more straightforward and accurate way of adjusting the stack-up tolerance distance "t".

Accordingly, the present invention provides a counter-balance mechanism for supporting a document handler on the frame of a copier, the mechanism including a first member for attachment to the document handler the first member being pivotally mounted about a pivot axis to a second member, the second member being provided with mounting means for mounting said second member to the frame of the copier, characterised by adjustment means for adjusting the position of the first member relative to the pivot axis.

The invention will be described further by way of example, with reference to the accompanying drawings in which:
Fig. 1 is a schematic side view of a copier having a recirculating document handler (RDH) with an automatic cover system in accordance with an embodiment of the invention;
Fig. 2 is a section taken through the document handler in Fig 1 along a line orthogonal to the plane of Fig 1;
Fig. 3 is a more detailed view of the counter-balance mechanism illustrated in Fig. 2;
Fig 4 illustrates a counter-balance mechanism according to one embodiment of the present invention;
Fig 5 is a top view of the mechanism in Fig 4 ;
Fig 6 is a front view of the mechanism in Fig 5;
Fig 7 is a section taken along the line Z-Z in Fig 6;
Figs 8 and 9 show part of the upper member to illustrate the slots and shaft disposition,
Fig 10 shows the cam showing also its assymetric centre-hole and
Fig 11 is a simplified cross-section through a prior art counter-balance mechanism.

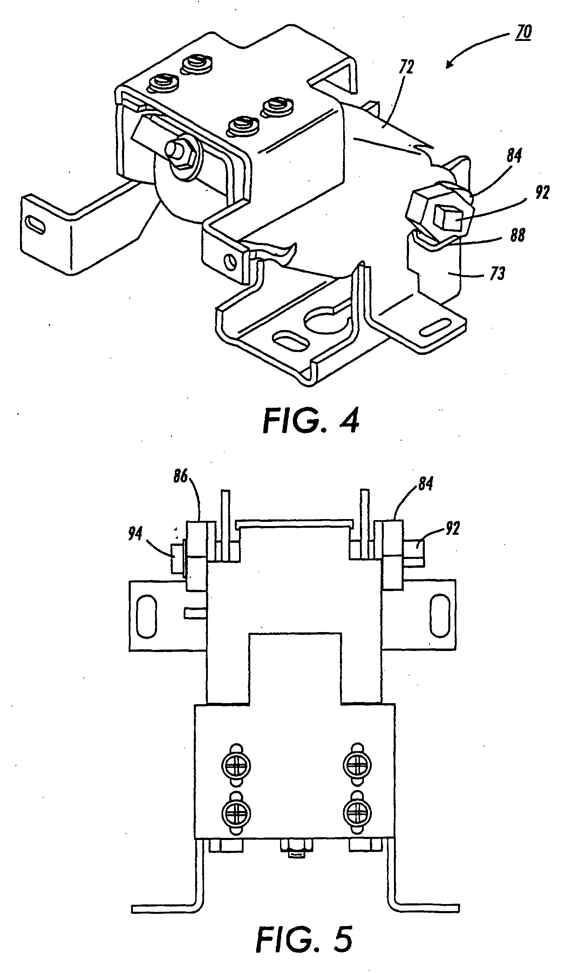

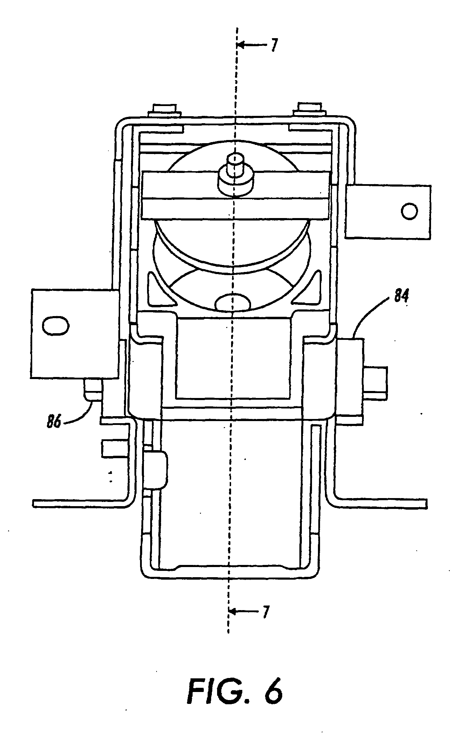

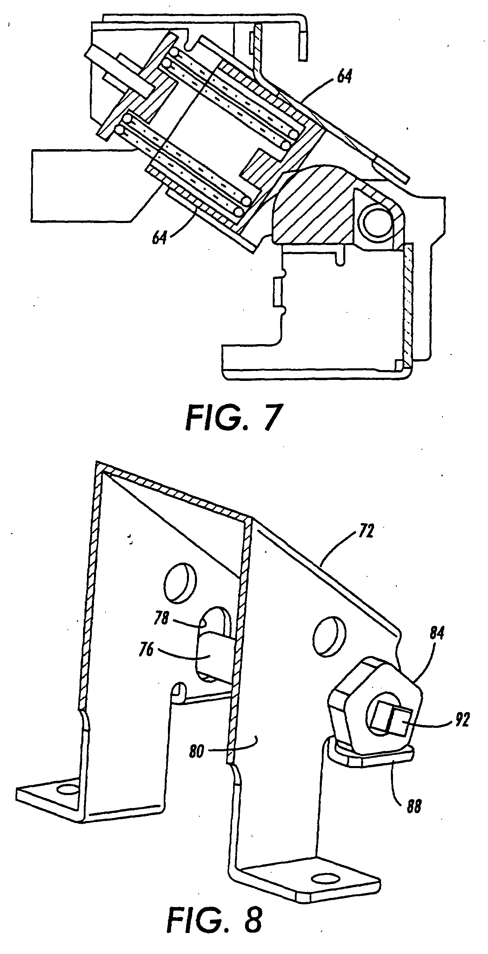

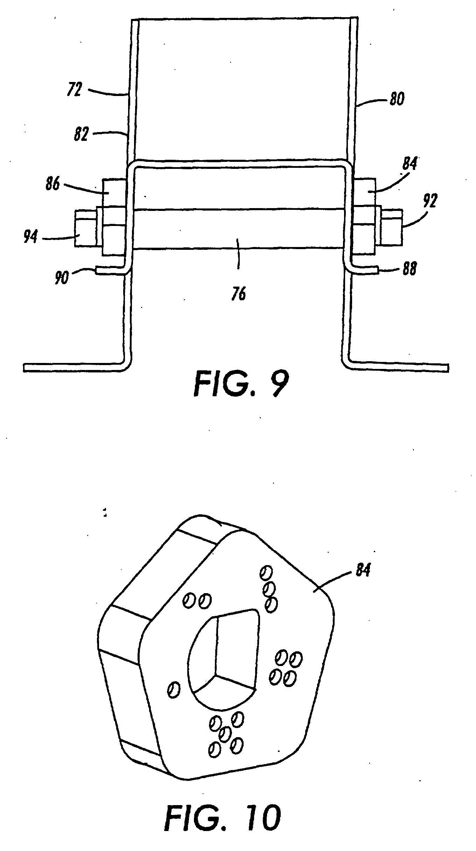

Figures 4 to 10 show various views and details relating to one specific embodiment of a counter-balance mechanism in accordance with the present invention. It will be appreciated that the invention is not limited to this specific embodiment. Referring to Figures 4 to 10, the mechanism 70 consists of an upper steel member 72 pivotally mounted to a lower steel member 73 about the longitudinal axis of a pivot shaft 76. The pivot shaft 76 is more clearly seen in Figures 8 and 9. The shaft 76 is fixed relative to the lower member 73 but arranged to be movable relative to the upper member 72. To provide this relative movement facility the upper member 72 is provided with a pair of opposed slots 78 formed in its sidewalls 80, 82, the ends of the shaft 76 each extending through a respective one of the slots outwardly from the sidewalls. Two identical multi-sided cams 84, 86 are provided on each end of the shaft 76, each cam having each of its sides set at differing distances from each respective centre-point. The upper member 72 is provided with two extensions, defining feet 88,90, integral with the sidewalls. Each of the cams 84, 86 rests on and is supported by the respective feet 88, 90.

To make an adjustment to the document handler to allow for a change in the tolerance stack-up distance it is necessary to rotate the shaft 76 so that the sides of each cam which bears on the feet, changes, and this way the centre of the shaft 76, which is constrained to move in the direction of the slots 78, is raised or lowered, relative to the upper member 72. The distance through which the shaft 76 moves is equal to the difference between the distance from the former side of the cam to its centre-point, and the distance from the latter side to its centre-point. The cam shown in Figure 10 has five sides and typically it has been found that the total range of adjustment can be of the order of 2mm, with each step adjustment being 0.5mm. Although the cam shown in Figure 10 is pentagonal it will be appreciated that cams having different numbers of sides, preferably at least three, can be adopted depending on the total adjustment and / or the desired step sizes required for the application.

The shaft 76 is fixed relative to the lower member 73, yet variable relative to the upper member 72, so the height "c" (see Figure 2) of the hinge unit of the counter-balance may be adjusted. The number of adjustments is dependent on the number of sides of the cam 84.

The resolved component of the spring force, which results from the captive spring mechanism 64 within the counter-balance, and which acts on the shaft 76 in the direction normal to the plane of the feet 88, 90, prevents the cam from rotating in the usual course of operation of the counter-balance. The captive spring mechanism is a compression spring exerting a force of 1400 Newtons at maximum compression when the document handler is in "down" position, ie in contact with the platen, the document handler itself weighing up to 12.4 Kg. The force acting on the feet 88, 90 is therefore considerable. It has however been found to be surprisingly easy to rotate the shaft 76 when required by the application of a small spanner to one of the square ends 92, 94 formed on the ends of the shaft 76. It has also been found surprisingly that the cams 84,86 suitable for use can be moulded from plastics material such as, by way of example, 60% glass-filled nylon..

The centre-hole of the cams 92, 94 is asymmetric. This ensures that in the case when two, or more, cams locate on the shaft 76, the orientation of each cam relative to the shaft 76 must be identical i.e. there could be no possibility of mis-assembly during manufacture.

One of the improvements which the invention makes over the previously known technology is that the counter-balance has a lower manufacturing cost. In practice two spaced-apart counter-balances are normally used for mounting the document handler to the top of the copier frame and thus substantial savings can be made.

A further improvement of the invention over the current counter-balance technology and its use with document handlers for copiers is that in use the adjustments (set / reset) in the present invention are both faster to make and more straightforward. This in turn leads to substantial savings in maintenance time and therefore substantial savings in maintenance costs associated with copier servicing. The use of the cams also provides a precision in the adjustment of the height of the document handler which is difficult to achieve in the prior art .

## Claims

1. A counter-balance mechanism (70) for supporting a document handler (24) on the frame of a copier, the mechanism (70) including a first member (72) for attachment to the document handler (24), the first member (72) being pivotally mounted about a pivot axis to a second member (73), the second member (73) being provided with mounting means for mounting said second member (73) to the frame of the copier, **characterised by** adjustment means ( 76, 78, 84 ) for adjusting the position of the first member (72) relative to the pivot axis.

2. A counter-balance mechanism (70) as claimed in claim 1, **characterised in that** the adjustment means (76, 78, 84) includes at least one multi-sided cam member (84, 86).

3. A counter-balance mechanism as claimed in claim 1 or claim 2, **characterised in that** the adjustment means (76, 78, 84) comprises a shaft (76) defining therethrough the pivot axis, the shaft extending through elongate slots (78) formed in opposing sidewalls of the first member (72), the ends of the shaft carrying identical cam multi-sided cam members (84,86).

4. A counter-balance mechanism as claimed in claim 3, **characterised in that** the cam members (84,86) bear on feet (88, 90).

5. A counter-balance mechanism as claimed in claim 4, **characterised in that** the feet (88, 90) are integrally formed with the first member (72).

6. A counter-balance mechanism as claimed in any one of claims 2 to 5, **characterised in that** each side of each cam (84, 86) is set at differing distances from each respective centre-point of each cam (84, 86).

7. A counter-balance mechanism as claimed in any one of claims 2 to 6, **characterised in that** the cam is provided with an assymetrical centre-hole therethrough.

8. A counter-balance mechanism as claimed in any one of claims 2 to 7, **characterised in that** each cam (84, 86) has at least three sides, and preferably each cam (84, 86) has five sides.

9. A document-handler supported on the frame of a copier by means of at least one counter-balance mechanism, **characterised in that** the counter-balance mechanism is as claimed in any one of claims 1 to 8.

10. A copier having a document-handler as claimed in claim 9, the document-handler being supported by two spaced-apart said counter-balance mechanisms.

## Patentansprüche

1. Gegengewichtsmechanismus (70) zum Halten eines Dokumenthandhabungsapparates (24) auf dem Rahmen eines Kopierers, wobei der Mechanismus (70) ein erstes Element (72) zur Befestigung des Dokumentenhandhabungsapparates (24) umfasst, wobei das erste Element (72) um eine Drehachse drehbar an einem zweiten Element (73) montiert ist, wobei das zweite Element (73) mittels einer Befestigungseinrichtung zum Befestigen des zweiten Elements (73) an dem Rahmen des Kopierers versehen ist, **dadurch gekennzeichnet, dass** eine Justiereinrichtung (76, 78, 84) zum Justieren der Position des ersten Elements (72) relativ zu der Drehachse vorgesehen ist.

2. Ein Gegengewichtsmechanismus (70) nach Anspruch 1, **dadurch gekennzeichnet, dass** die Justiereinrichtung (76, 78, 84) zumindest ein mehrseitiges Kurvenelement (84, 86) umfasst.

3. Ein Gegengewichtsmechanismus nach Anspruch 1 oder 2, **dadurch gekennzeichnet, dass** die Justiereinrichtung (76, 78, 84) eine Welle (76) umfasst, die die Drehachse definiert, wobei die Welle sich durch in gegenüberliegenden Seitenwänden des ersten Elements (72) gebildete längliche Schlitze (78) erstreckt, wobei die Enden der Welle identische mehrseitige Kurvenelemente (84, 86) aufweisen.

4. Ein Gegengewichtsmechanismus nach Anspruch 3, **dadurch gekennzeichnet, dass** die Kurvenelemente (84, 86) auf Füßen (88, 90) gelagert sind.

5. Ein Gegengewichtsmechanismus nach Anspruch 4, **dadurch gekennzeichnet, dass** die Füße (88, 90) in integraler Weise mit dem ersten Element (72) ausgebildet sind.

6. Ein Gegengewichtsmechanismus nach einem der Ansprüche 2 bis 5, **dadurch gekennzeichnet, dass** jede Seite des Kurvenelements (84, 86) mit unterschiedlichen Abständen von jedem des jeweiligen Mittelpunkts jedes Kurvenelements (84, 86) festgelegt ist.

7. Ein Gegengewichtsmechanismus nach einem der Ansprüche 2 bis 6, **dadurch gekennzeichnet, dass** das Kurvenelement mit einem asymmetrischen Mittelloch vorgesehen ist.

8. Ein Gegengewichtsmechanismus nach einem der Ansprüche 2 bis 7, **dadurch gekennzeichnet, dass** jedes Kurvenelement (84, 86) zumindest drei Seiten aufweist, und dass vorzugsweise jedes Kurvenelement (84, 86) fünf Seiten aufweist.

9. Dokumentenhandhabungsapparat, der auf dem Rahmen eines Kopierers mittels zumindest eines Gegengewichtsmechanismus befestigt ist, **dadurch gekennzeichnet, dass** der Gegengewichtsmechanismus die Merkmale gemäß einem der Ansprüche 1 bis 8 aufweist.

10. Kopierer mit einem Dokumentenhandhabungsapparat nach Anspruch 9, wobei der Dokumentenhandhabungsapparat von zwei beabstandeten dieser Gegengewichtsmechanismen gehalten ist.

## Revendications

1. Mécanisme à contrepoids (70) destiné à supporter un dispositif de manipulation de documents (24) sur le bâti d'un copieur, le mécanisme (70) comprenant un premier élément (72) destiné à la fixation sur le dispositif de manipulation de documents (24), le premier élément (72) étant monté avec possibilité de pivotement autour d'un axe de pivotement sur un second élément (73), le second élément (73) étant muni d'un moyen de montage destiné à monter ledit second élément (73) sur le bâti du copieur, **caractérisé par** un moyen d'ajustement (76, 78, 84) destiné à ajuster la position du premier élément (72) par rapport à l'axe de pivotement.

2. Mécanisme à contrepoids (70) selon la revendication 1, **caractérisé en ce que** le moyen d'ajustement (76, 78, 84) comprend au moins un élément de came à plusieurs côtés (84, 86).

3. Mécanisme à contrepoids selon la revendication 1 ou la revendication 2, **caractérisé en ce que** le moyen d'ajustement (76, 78, 84) comprend un axe (76) définissant par l'intermédiaire de celui-ci l'axe de pivotement, l'axe s'étendant au travers de fentes allongées (78) formées dans des parois latérales opposées du premier élément (72), les extrémités de l'axe portant des éléments de came à plusieurs côtés de came identiques (84, 86).

4. Mécanisme à contrepoids selon la revendication 3, **caractérisé en ce que** les éléments de came (84, 86) portent sur des pattes (88, 90).

5. Mécanisme à contrepoids selon la revendication 4, **caractérisé en ce que** les pattes (88, 90) sont formées de façon intégrée au premier élément (72).

6. Mécanisme à contrepoids selon l'une quelconque des revendications 2 à 5, **caractérisé en ce que** chaque côté de chaque came (84, 86) est établi à des distances différentes de chaque point central respectif de chaque came (84, 86).

7. Mécanisme à contrepoids selon l'une quelconque des revendications 2 à 6, **caractérisé en ce que** la came est munie d'un trou central asymétrique au travers de celle-ci.

8. Mécanisme à contrepoids selon l'une quelconque des revendications 2 à 7, **caractérisé en ce que** chaque came (84, 86) comporte au moins trois côtés, et de préférence chaque came (84, 86) comporte cinq côtés.

9. Dispositif de manipulation de documents supporté sur le bâti d'un copieur au moyen d'au moins un mécanisme à contrepoids, **caractérisé en ce que** le mécanisme à contrepoids est tel que revendiqué dans l'une quelconque des revendications 1 à 8.

10. Copieur comportant un dispositif de manipulation de documents selon la revendication 9, le dispositif de manipulation de documents étant supporté par deux dits mécanismes à contrepoids espacés.
